# EUROPÄISCHE PATENTSCHRIFT

(11) **EP 2 815 718 B1**
(45) Veröffentlichungstag und Bekanntmachung des Hinweises auf die Patenterteilung: **21.12.2016**
(21) Anmeldenummer: 13172961.8
(22) Anmeldetag: 20.06.2013
(51) Int. Cl.: A61C 13/00, A61C 13/07

(54) **Form und Verfahren zur Herstellung von Zahnverblendungselementen**
Mold and method for producing tooth veneer elements
Moule et procédé de fabrication d'éléments de facette dentaire

(43) Veröffentlichungstag der Anmeldung: 24.12.2014
(73) Patentinhaber: Coltène/Whaledent AG, 9450 Altstaetten (CH)
(72) Erfinder: Böhner, Ralf Dr., 9451 Kriessern (CH); Schlüter, Martin Dr., 88239 Wangen (DE)
(74) Vertreter: Hepp Wenger Ryffel AG

(56) Entgegenhaltungen:
- DE-A1- 10 234 994
- GB-A- 190 904 431
- US-A- 1 599 084
- US-A- 5 948 129

## Beschreibung

Die Erfindung betrifft eine Form zur Herstellung von Zahnverblendungselementen sowie ein Verfahren zu deren Herstellung gemäss den Oberbegriffen der unabhängigen Ansprüche.

Zahnverblendungselemente, auch Veneers genannt, sind dünne Schalen in Zahnform und -farbe, die auf natürliche Zähne aufgebracht werden. Derartige Verblendungselemente werden in der Regel für die gut sichtbaren Frontzähne zur nicht kurativ indizierten ästhetischen Frontzahnkorrekturen und mitunter auch für funktionelle Korrekturen angewendet. Es sind aber auch Anwendungen an anderen Zähnen wie z.B. Eckzähnen oder Backenzähne denkbar.

Als besonders erfolgreich und kostengünstig haben sich vorgefertigte Verblendungselemente aus Kompositmaterialien erwiesen, so genannten "direct veneers", wie sie auch von der Anmelderin unter dem Namen Componeer® vertrieben werden. Derartige Verblendungselemente werden üblicherweise in einer Auswahl von Formen und Farben bereitgestellt, aus welchen der Zahnarzt aufgrund der individuellen Vorgaben der Zahnsituation des Patienten auswählen kann. Die vorgefertigten Verblendungselemente können mit einem Haftstoff, einem so genannten "Bond" oder "Bonding", wie z.B. einem pastösen Kompositmaterial auf den Zahn bzw. Zahnstumpf aufgebracht werden. In der Regel kommen dabei lichtpolymerisierbare Kompositmaterialien zur Anwendung, welche analog oder identisch zu bereits bekannten Füllmaterialien und/oder dem Material der Verblendungselemente sind. Nach dem Aufbringen kann der Zahnarzt (im Gegensatz zu ebenfalls bekannten Keramikschalen) die Verblendungselemente durch Schleifen und Polieren nachbearbeiten, um gesamthaft ein individuelles und ästhetisch hochwertiges Ergebnis zu erreichen.

Derartige vorgefertigte Verblendungselemente werden üblicherweise in Formen zum Endprodukt geformt und das verwendete Material in der Form gehärtet. Beim Formen der Zahnverblendungselemente kann überschüssiges Material austreten, sodass ein Grat entsteht. Dieser Grat muss nachgängig abgefräst oder abgeschliffen werden. Ein derartiges Herstellungsverfahren ist kosten- sowie zeitintensiv.

Die Dokumente US1599084 und DE10234994 offenbaren Vorrichtungen zur Herstellung einer Zahnverblendung.

Es ist daher Aufgabe der Erfindung, die Nachteile des Standes der Technik zu überwinden. Insbesondere ist es eine Aufgabe der Erfindung, ein kostengünstiges Herstellungsverfahren sowie die zugehörige Form bereitzustellen, welches die Herstellung der Zahnverblendungselemente erleichtert.

Die Aufgabe wird durch die kennzeichnenden Merkmale der unabhängigen Ansprüche gelöst.

Insbesondere führt zur Lösung der Aufgabe eine Form zur Herstellung von Zahnverblendungselementen, welche ein erstes Formenteil und wenigstens ein weiteres Formenteil umfasst. Dabei ist zwischen dem ersten und dem wenigstens einen weiteren Formenteil in einem geschlossenen Zustand der Form ein Hohlraum zur zumindest teilweisen Formung des Zahnverblendungselements gebildet. Das erste Formenteil weist an einer Trennfläche eine Formfläche auf, welche den Hohlraum zumindest teilweise begrenzt und zur zumindest teilweisen Ausbildung einer Oberfläche, bevorzugt einer äusseren Frontfläche, des Zahnverblendungselements ausgebildet ist. Die Form zeichnet sich dadurch aus, dass das erste Formenteil einen Flächenabschnitt aufweist, welcher wenigstens in einem Abschnitt an einen Rand der Formfläche angrenzt, wobei der Flächenabschnitt gegenüber den Flächennormalen längs des Randes der Formfläche zur Trennfläche des ersten Formenteils hin geneigt ist, und wobei die Neigung des Flächenabschnitts derart gewählt ist, dass der Flächenabschnitt in jedem Punkt längs des Randes von einer Flächennormalen in diesem Punkt bzw. in einem unmittelbar benachbarten Punkt der Formfläche weg geneigt ist.

"Trennfläche" bezeichnet hierbei einen Flächenbereich der Aussenfläche des ersten Formenteils, an welchem die Formfläche angeordnet ist. An der Trennfläche können gegebenenfalls z.B. die wenigstens zwei Formenteile voneinander trennbar sein. Die Trennfläche kann aber auch eine vordere Aussenfläche des ersten Formenteils bezeichnen, welche im Wesentlichen zum wenigstens einen weiteren Formteil hin angeordnet ist. Die Trennfläche kann eben ausgebildet sein oder einen weitgehend beliebigen Verlauf aufweisen.

"Formfläche" bezeichnet einen Form gebenden Bereich des ersten Formenteils. Die Formfläche kann, zumindest teilweise, in einer Vertiefung am ersten Formenteil, d.h. von der Trennfläche in das erste Formenteil hinein versetzt, ausgebildet sein. In diesem Fall ist die Formfläche vorliegend ebenfalls als an der Trennfläche angeordnet bezeichnet. Die Formfläche bildet dabei z.B. eine Negativform eines späteren Oberflächenbereichs des Zahnverblendungselements, insbesondere z.B. einer später sichtbaren äusseren Oberfläche. Als "Rand" der Formfläche ist eine Begrenzung der Formfläche bezeichnet, welche die Formfläche von weiteren Bereichen des Formenteils abgrenzt, die nicht unmittelbar an der Formgebung des endgültigen Zahnverblendungselements beteiligt sind.

"Flächenormale" bezeichnet in jedem Punkt der Formfläche eine Richtung senkrecht zur Formfläche. Die Flächennormalen, gegenüber welchen der Flächenabschnitt zur Trennfläche hin geneigt ist, können dem Rand unmittelbar, mit anderen Worten beliebig nahe, benachbart sein. Es versteht sich, dass die erfindungsgemässe Neigung des Flächenabschnitts derart gewählt ist, dass der Flächenabschnitt in jedem Punkt längs des Rands von einer Flächenormalen in diesem Punkt bzw. in einem unmittelbar benachbarten Punkt der Formfläche weg geneigt ist. Liegt der Rand der Formfläche in einer Ebene, sind auch die Flächenormalen im Wesentlichen in dieser Ebene angeordnet, womit der erfindungsgemässe Flächenabschnitt von dieser Ebene weg zur Trennfläche hin geneigt ist.

Bevorzugt ist der Flächenabschnitt dabei gegenüber nach aussen gerichteten Flächennormalen zur Trennfläche hin geneigt. Allerdings sind grundsätzlich auch Ausführungsformen denkbar, bei welchen der Flächenabschnitt gegenüber nach innen gerichteten Flächennormalen zur Trennfläche hin geneigt ist.

Der erfindungsgemässe Flächenabschnitt des ersten Formenteils ist ein an die Formfläche angrenzender Flächenabschnitt, der jedoch nicht gezielt zur Formgebung des Zahnverblendungselements verwendet wird. Der Flächenabschnitt hat den Vorteil, dass ein beim Formen des Zahnverblendungselements aufgrund der Nahtlinie im Hohlraum zwischen dem ersten und dem zweiten Formenteil ausgebildeter Grat am Zahnverblendungselement nicht senkrecht nach aussen absteht, wie es bei herkömmlichen Formen der Fall ist. Vielmehr kann der Grat gezielt so ausgestaltet werden, dass er von der später sichtbaren äusseren Oberfläche des Zahnverblendungselements weg weist. In diesem Fall braucht der Grat je nachdem überhaupt nicht mehr abgefräst oder abgeschliffen zu werden bzw. kann auf einfache Weise mit nur geringen, später sichtbaren Rückständen entfernt werden.

Bevorzugt ist der Flächenabschnitt in jedem Punkt längs des Abschnitts, in welchem er an den Rand angrenzt, gegenüber den Flächennormalen um einen Winkel von wenigstens 45 Grad geneigt.

Auf diese Weise ist sichergestellt, dass der beim Formen entstehende Grat in einem ausreichend grossen Winkel geneigt ist. Bevorzugt ist der Flächenabschnitt um einen Winkel von 90 Grad geneigt und ist somit mit anderen Worten senkrecht zu den Flächennormalen ausgerichtet.

Mit Vorteil ist die Formfläche zumindest teilweise derart in einer Vertiefung an der Trennfläche ausgebildet, dass der Rand der Formfläche wenigstens abschnittweise, bevorzugt über seine gesamte Länge, wenigstens einen Abstand von der Trennfläche aufweist. In diesem Fall ist der erfindungsgemässe Flächenabschnitt bevorzugt von einem Innenwandabschnitt, insbesondere der gesamten Innenwand, der Vertiefung gebildet. Der Abstand beträgt dabei bevorzugt von 1 mm bis 15 mm. Es hat sich gezeigt, dass ein derartiger Abstand ein optimales Verhältnis von Gratwinkel und Abmessungen der Formenteile erlaubt.

Mit Vorteil kann der im geschlossenen Zustand der Form gebildete Hohlraum ebenfalls vollständig im ersten Formteil angeordnet sein. Hierzu ist bevorzugt das erste Formteil und das zweite Formteil derart ausgebildet, dass die zugehörigen Formflächen in geschlossenem Zustand beide vollständig innerhalb des ersten Formteils angeordnet sind, d.h. von der Trennfläche in das erste Formteil hinein zurück versetzt.

Bevorzugt weist der wenigstens eine weitere Formenteil ein Stempelelement auf, wobei eine Stirnfläche des Stempelelements eine weitere Formfläche aufweist, welche den Hohlraum in geschlossenem Zustand der Form zumindest teilweise begrenzt. Bei einer zweiteiligen Form bilden die beiden Formflächen eine im Wesentlichen vollständige Begrenzung des Hohlraums. Dabei können selbstverständlich Entlüftungsschlitze oder Kanäle diese Begrenzung durchbrechen. Falls das erste Formenteil eine Vertiefung aufweist, ist das Stempelelement zum Erstellen des geschlossenen Zustands der Form bevorzugt in die Vertiefung des ersten Formenteils einbringbar.

Das Stempelelement kann austauschbar ausgebildet und am wenigstens einen weiteren Formenteil angebracht sein. Auf diese Weise können unterschiedliche Formflächen mit demselben Formenteil zur Anwendung kommen. Ebenso gewährleistet ein austauschbares Stempelelement einen kostengünstigen Austausch einer verschlissenen Formfläche. Das Stempelelement kann dabei in eine Ausnehmung des wenigstens einen weiteren Formenteils einsetzbar sein. Ebenso kann selbstverständlich die Formfläche des ersten Formenteils an einem auswechselbaren Einsatz des ersten Formenteils ausgebildet sein.

Bevorzugt ist gegebenenfalls die Vertiefung des ersten Formenteils weitgehend prismatisch ausgebildet, wobei die Formfläche einen Boden der Vertiefung bildet. Bevorzugt bildet die Mantelfläche der prismatischen Form der Vertiefung dabei den erfindungsgemässen Flächenabschnitt. Dabei weist das Stempelelement bevorzugt eine im Wesentlichen komplementäre prismatische Gestalt auf und die weitere Formfläche bildet die Stirnseite des Stempelelements. Das Stempelelement und die Vertiefung können somit zum Erstellen des geschlossenen Zustands der Form ineinander gefügt werden, wobei die Stirnseite des Stempelelements und der Boden der Vertiefung gemeinsam den Hohlraum bilden. Vertiefung und Stempelelement können dabei auch ausserhalb der Formflächen Abweichungen von komplementären Formen aufweisen wie z.B. eine Abfasung an einem Rand der Vertiefung oder ähnliche Massnahmen, um das Fügen der Formenteile zu erleichtern. Es versteht sich, dass die prismatische Form grundsätzlich gerade oder schief prismatisch sein kann.

Bevorzugt umfasst die Form ein Metall und/oder einen Kunststoff. Als Metalle können dabei Reinmetalle oder Legierungen wie z.B. Stahl, Messing, Bronze, Kupfer oder Zink zum Einsatz kommen. Als Stahl kommt bevorzugt ein Kohlenstoffstahl, Nickelstahl ("Ferronickel"), Invarstahl, Chromnickelstahl, Manganstahl ("Ferromangan"), Molybdänstahl ("Ferromolybdän"), Siliziumstahl ("Ferrosilizium"), V2A-Stahl oder ein Wolframstahl ("Ferrowolfram") zur Anwendung.

Als Kunststoffe haben sich bewährt Polyamid (PA), Plyaryletherketon (PAEK), Polyamidimid (PAI), Polyacrylnitril (PAN), Polybutylenterephtalat (PBT), Polycarbonat (PC), Polycyclohexylenimethylenterephatalat (PCT), Polyethylen (PE), Polyethylen, ultrahochmolekular (sehr hohe Molmasse, PE-UHMW),Polyetheretherketon (PEEK), Polyetherimid (PEI), Polyethylennaphthalat (PEN), Polyethersulfon (PES), Polyethylenterephthalat (PET), Polyimid (PI), Polymethacrylimid (PMI), Polymethylmethacrylat (PMMA), Polymethylpenten (PMP), Polyoxymethylen (POM), Polypropylen (PP), Polyphtalamid (PPA), Polyphenylenether (PPE), Polyphenylensulfid (PPS), Polypyrrol (PPY), Polysulfon (PSU), Polytetrafluorethylen (PTFE), Polyurethan (PU), Plyvinylalkohol (PVA), Polyvinylacetat (PVAC), Polyvinylchlorid (PVC), Cyclo-Olefin-Polymere (COP), Cyclo-Olefin-Copolymere (COC). Es versteht sich, dass die Kunststoffe auch mit einem Füllmaterial zu einem Kompositmaterial ergänzt sein können.

Eine Form aus diesen Materialien ermöglicht eine massgenaue Herstellung des Zahnverblendungselements innerhalb der vorgegebenen Toleranzgrenzen bei guter Verschleissfestigkeit der Form.

Der Hohlraum in der Form kann zwischen dem ersten Formenteil und dem zweiten Formenteil eine mittlere Dicke von 0,1 bis 1,5 mm aufweisen. Bevorzugt variiert die Dicke entlang einer zur Messrichtung der Dicke weitgehend senkrechten Längsrichtung und/oder Querrichtung. Längs- und Querrichtung sind weitgehend rechtwinklig zueinander ausgerichtet sind. Länge und Breite beschreiben demnach zueinander senkrechte Abstände von gegenüberliegenden Randbereichen der Formfläche, wobei Länge und Breite jeweils als Maximalwert zu verstehen sind.

Als Längsrichtung ist diejenige Richtung bezeichnet, welche bei vorgesehener Anordnung des mit der Form geformten Zahnverblendungselements parallel zu einer Längsrichtung (axiale Richtung) des Zahnes angeordnet ist. Entsprechend ist die Querrichtung der Breite weitgehend senkrecht zu der axialen Richtung des Zahnes angeordnet. Bevorzugt weist der Hohlraum eine Länge im Bereich von 1 mm bis 15 mm und eine Breite im selben Bereich auf, wobei Längen und Breiten weitgehend beliebig kombinierbar sind.

Somit lassen sich Zahnverblendungselemente herstellen, die ein optimales Verhältnis zwischen Festigkeit und Haltbarkeit sowie einen guten optischen Eindruck ermöglichen.

Bevorzugt ist das Zahnverblendungselement aus einem Kompositmaterial gefertigt. Dabei sind bei den genannten Abmessungen der Form dauerhaft gute mechanische Eigenschaften und eine ästhetische Restauration gewährleistet.

Geeignete Kompositmaterialien umfassen eine organische Kunststoffmatrix (organische Phase), insbesondere mit zur Polymerisierung vorgesehenen Monomeren, die mit einem anorganischen, insbesondere festen, Füllstoff versetzt ist (anorganische Phase). Mit Vorteil umfassen die organische Kunststoffmatrix wenigstens ein Methylacrylat und/oder der anorganische Füllstoff wenigstens ein Glas. Als Glas kommen bevorzugt ein Bariumglas und/oder ein Strontiumglas zum Einsatz.

Weitere bevorzugte anorganische Füllstoffe sind amorphe, z.B. granulöse, beispielsweise weitgehend kugelförmige, Materialien beispielsweise auf der Basis von Mischoxiden aus SiO₂, ZrO₂ und/oder TiO₂; pyrogene Kieselsäure oder Fällungskieselsäure sowie sonstige Füllstoffe mit durchschnittlichen Partikelgrössen von etwa 0.5 bis etwa 5 µm, insbesondere Quarz (Silikate, Sande), Glaskeramiken (z.B. Barium-Aluminium-Glas) oder Glaspulver sowie röntgenopake Füllstoffe, wie Ytterbiumtrifluorid. Ebenso kann der Füllstoff auch so genannte Mikrofüller-Komplexe wie z.B. Hybrid-Komposite und Nanopartikel (Nano-Hybridkomposite) umfassen. Darüber hinaus können grundsätzlich auch Glasfasern, Polyamide oder Kohlenstofffasern als Füllstoffe eingesetzt werden. Die Oberfläche des Füllstoffs ist in der Regel silanisiert, um eine Verbindung mit der organischen Matrix zu ermöglichen.

Weitere geeignete polymerisierbaren mono- oder multifunktionelle Monomere der organischen Phase sind Mono(meth)acrylate, wie Methyl-, Ethyl-, Butyl-, Benzyl-, Furfuryl- oder Phenyl(meth)acrylat, mehrfunktionelle Acrylate und Methacrylate wie zum Beispiel Bisphenol-(A)-di(meth)acrylat, Bisphenol-A-Glycidylmethacrylat (bekannt als "Bis GMA", welches ein Additionsprodukt aus Methacrylsäure und Bisphenol-A-diglycidylether ist), UDMA (ein Additionsprodukt aus 2-Hydroxyethylmethacrylat und 2,2,4-Hexamethylendiisocyanat), Di- , Tri- und Tetraethylenglykoldi(meth)acrylat (wie z.B. TEGDMA), Decandioldi(meth)acrylat, Trimethylolpropantri(meth)acrylat, Pentaerythrittetra(meth)acrylat und Butandioldi(meth)acrylat, 1,10-Decandioldi(meth)acrylat oder 1,12-Dodecandioldi(meth)acrylat. Ebenso sind organische Phasen umfassend methacrylatmodifizierte Polysiloxane bekannt.

Die Aushärtung des Kompositmaterials erfolgt aufgrund von geeigneten Initiatoren und ggf. weiterer polymerisationsfähiger Komponenten z.B. durch thermische (thermische Härtung), photochemische (Lichthärtung) oder redoxinduzierte Polymerisation (chemische Härtung). Dabei können bei Vorhandensein unterschiedlicher polymerisationsfähiger Gruppen, z. B. von (Meth)acryl- und Epoxidgruppen, auch mehrere Härtungsmechanismen, z. B. radikalische und kationische Polymerisation, gleichzeitig oder in aufeinander folgenden Stufen zur Anwendung kommen.

Bevorzugte Initiatoren für die thermische Härtung sind Peroxide, wie beispielsweise Dibenzoylperoxid, Dilaurylperoxid, tert.-Butylperoctoat und tert.-Butylperbenzoat sowie Azobisisobutyroethylester, Benzpinakol und 2,2-Dimethylbenzpinakol.
Bevorzugte Photoinitiatoren sind Benzophenon und Benzoin sowie deren Derivate, □-Diketone und deren Derivate, wie beispielsweise 9,10-Phenanthrenchinon, Diacetyl und 4,4-Dichlorbenzil. Weitere bevorzugte Photoinitiatoren sind 2,2-Methoxy-2-phenyl-acetophenon und insbesondere Kombinationen von □-Diketonen mit Aminen als Reduktionsmittel, wie zum Beispiel N-Cyanoethyl-N-methylanilin, 4-(N,N-Dimethylamino)-benzoesäureester, N,N-Dimethylaminoethylmethacrylat, N,N-Dimethyl-sym.-xylidin oder Triethanolamin. Darüber hinaus sind Acylphosphine, wie zum Beispiel 2,4,6-Trimethylbenzoyldiphenyl oder Bis-(2,6-dichlorbenzoyl)-4-N-propylphenylphosphinoxid, als Photoinitiatoren geeignet. Besonders bevorzugte Photoinitiatoren sind Campherchinon, welches Licht mit einer Wellenlänge von 440 bis 480 nm absorbiert und dadurch aktivierbar ist, bzw. Phenyl-Propandiol, das durch Licht mit einer Wellenlänge von 300 bis 450 nm aktivierbar ist. In der Regel kommt dabei typischerweise Blaulicht im Wellenlängenbereich von 300 nm bis 500 nm zur Anwendung.

Für eine duale Aushärtung von radikalisch und kationisch polymerisierbaren Systemen eignen sich besonders Diaryliodonium oder Triarylsulfoniumsalze, wie zum Beispiel Triphenylsulfoniumhexafluorophosphat und -hexafluoroantimonat.

Als Initiatoren für eine redoxinduzierte Polymerisation (chemische Härtung) bei Raumtemperatur oder Tieftemperaturen werden Redox-Initiatorkombinationen, wie zum Beispiel Kombinationen von Benzoyl- oder Laurylperoxid mit N,N-Dimethylsym.-xylidin oder N,N-Dimethyl-p-toluidin, verwendet. In der Regel kommen dabei 2-Komponenten-Systeme zum Einsatz, bei welchen aufgrund einer Vermischung der beiden Komponenten der Initiator aktivierbar ist und die Polymerisation auslöst.

Das Kompositmaterial kann dabei weitere Bestandteile aufweisen wie z.B. Mono-, Di- und Triacrylate als Comonomere oder z.B. Toluidin als Beschleuniger der Photopolymerisation. Weitere Zusätze können beispielsweise Polymerisationsinhibitoren zur Vermeidung einer vorzeitigen Polymerisation wie z.B. Hydrochinon als Inhibitor einer Photopolymerisation umfassen. Weiter können weitere Additive wie Benzophenon als UV-Stabilisator, Oxidationsinhibitoren, Verlaufsmittel, Färbemittel (Pigmente und Farbstoffe), Stabilisatoren, Aromastoffe, mikrobiozide Wirkstoffe und/oder Weichmacher vorhanden sein.

Mit Vorteil weist wenigstens eines der Formenteile zumindest einen Entlüftungskanal auf, welcher mit dem Hohlraum der Form kommuniziert, wobei der Entlüftungskanal bevorzugt im ersten Formenteil ausgebildet ist und an der Formfläche des ersten Formenteils, weitgehend mittig angeordnet, mündet. Über den Entlüftungskanal kann beim Formen einerseits Luft sowie überschüssiges Kompositmaterial aus dem Hohlraum entweichen. Der Entlüftungskanal kann dabei derart an den Hohlraum anschliessen, dass das in den Entlüftungskanal gelangte Kompositmaterial eine Haltevorrichtung bildet, an welcher das Zahnverblendungselement bei einer späteren Applikation am Zahn von einem Benutzer gehalten werden kann. Auf diese Weise kann beim Formen ein je nach Ausbildung des Entlüftungskanals zapfenförmiger Stumpf an der Oberfläche des Zahnverblendungselements angeformt werden. Der Stumpf kann nach der Applikation des Zahnverblendungselements entfernt werden.

Bevorzugt weist der Hohlraum ein Volumen von etwa 1 mm³ bis 340 mm³ auf. Insbesondere hat sich gezeigt, dass bei diesen Volumina die oben genannten Materialien des Zahlverblendungselements zu den gewünschten hochwertigen Ergebnissen z.B. hinsichtlich des optischen Erscheinungsbildes und der mechanischen Stabilität führen können.

Zur Lösung der Aufgabe führt weiterhin ein Verfahren zur Herstellung eines Zahnverblendungselements, wobei ein fliessfähiges, viskoses oder pastöses Kompositmaterial in einen Hohlraum einer erfindungsgemässen Form eingebracht und, insbesondere unter Druck, von der Form geformt wird. Als Kompositmaterial kommt dabei bevorzugt eines der oben genannten Materialien für Zahnverblendungselemente zum Einsatz. Das Kompositmaterial kann dabei in einem geöffneten Zustand der Form auf wenigstens eine der Formflächen aufgebracht werden. Dabei wird bevorzugt etwas mehr Kompositmaterial eingebracht, als für das Zahnverblendungselement benötigt wird, welches beim Formen z.B. durch an der Form ausgebildete Entlüftungskanäle entweichen kann. Das Kompositmaterial kann aber auch, weitgehend analog einem Spritzgussverfahren, in die geschlossene Form eingespritzt werden. Hierzu können entsprechende Einspritzmittel und - Vorrichtungen an der Form ausgebildet sein.

Bevorzugt entsteht beim Formen ein Grat mit einer Oberfläche am Zahnverblendungselement, welche Oberfläche des Grats unter einem Winkel grösser als 90 Grad zu einer angrenzenden Oberfläche des Zahnverblendungselements ausgerichtet ist. Mit anderen Worten ist die Oberfläche des Grates gegenüber von der angrenzenden Oberfläche des Zahnverblendungselements weg geneigt.

Mit Vorteil erfolgt die Ausbildung dieses Grats aufgrund des erfindungsgemässen Flächenabschnitts. Die Oberfläche des Grates ist dabei bevorzugt einer Oberfläche des Zahnverblendungselements zugewendet, welche nach einer Applikation des Zahnverblendungselements eine äussere, sichtbare Oberfläche bildet. Bevorzugt findet die Härtung des Kompositmaterials nach dem Formen noch innerhalb der Form statt. Eine derartige Härtung ermöglicht ein formtreues Vernetzen des Kompositmaterials und ist einfach und sicher durchzuführen.

Die Erfindung wird nachfolgend in Ausführungsbeispielen anhand von Figuren näher erläutert. Hierbei zeigen schematisch:
- Figur 1: Eine Schnittansicht durch eine erfindungsgemässe Form in einem geschlossenen Zustand;
- Figur 2: eine Ausschnittsvergrösserung der Schnittansicht der Fig. 1;
- Figur 3: eine Schnittansicht durch eine weitere Ausführungsform einer erfindungsgemässen Form in geöffnetem Zustand;
- Figur 4: eine Schnittansicht der Form der Fig. 3 in geschlossenem Zustand;
- Figur 5: eine Schrägansicht einer Formfläche der Form der Fig. 1 mit teilweise dargestelltem erfindungsgemässen Flächenabschnitt.

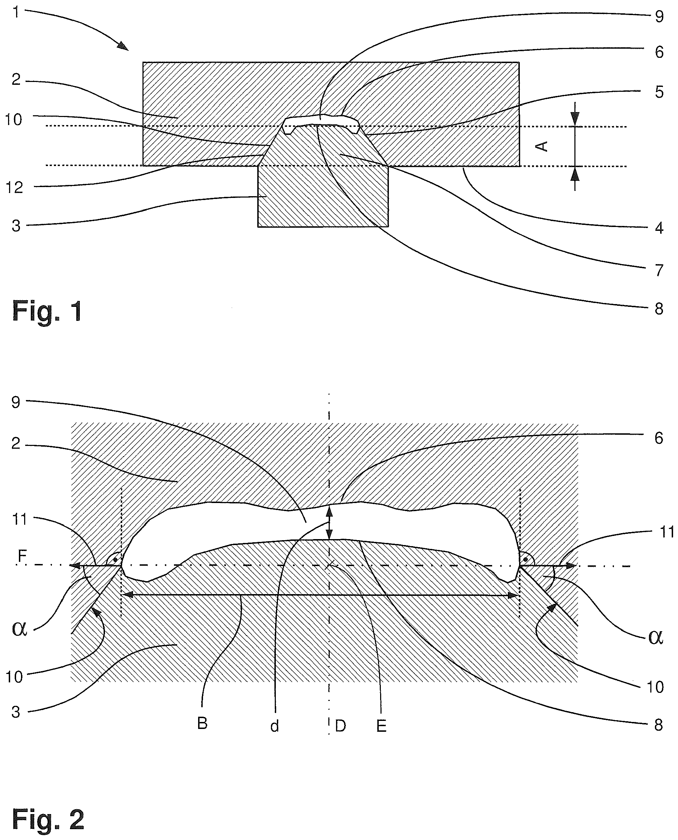

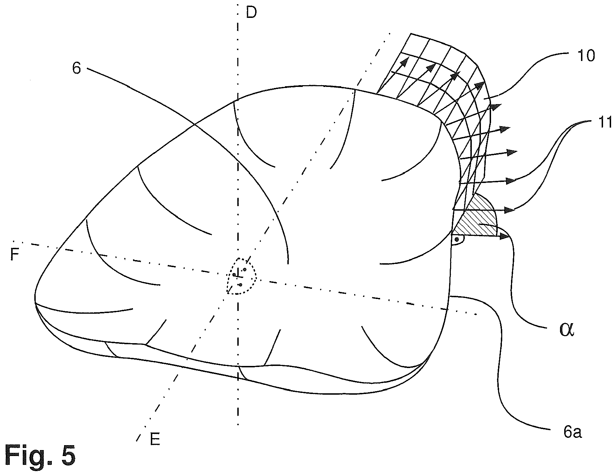

Figur 1 zeigt eine Schnittansicht durch eine erfindungsgemässe Form 1. Der Querschnitt liegt dabei senkrecht zu einer Längsrichtung E (siehe z.B. Fig. 5) des mit der Form 1 formbaren Zahnverblendungselements, wobei die Längsrichtung des Zahnverblendungselements als diejenige Richtung definiert ist, welche bei vorgesehener Applikation an einem Zahn parallel zu dessen axialer Richtung angeordnet ist. Figur 2 zeigt eine Ausschnittsvergrösserung der Schnittansicht der Fig. 1 im Bereich eines Hohlraums 9. Die Fig. 1 und 2 sind im Folgenden gemeinsam beschrieben. Eine Querrichtung F des Hohlraums entspricht der Querrichtung (Richtung einer Breite) des damit formbaren Zahnverblendungselements und steht senkrecht auf E (siehe auch Fig. 5).

Die Form 1 umfasst ein erstes Formenteil 2 und ein zweites Formenteil 3. An einer Trennfläche 4 des ersten Formenteils 2 ist eine Vertiefung 5 ausgebildet, in welcher eine erste Formfläche 6 des ersten Formenteils 2 angeordnet ist. Die Formfläche 6 dient dabei zur Ausbildung einer äusseren Oberfläche des Zahnverblendungselements, welche nach dessen Applikation im Wesentlichen sichtbar bleibt.

Das zweite Formenteil 3 umfasst ein Stempelelement 7, welches im geschlossenen Zustand der Form 1 in der Vertiefung 5 angeordnet ist. Stirnseitig am Stempelelement 7 ist eine Formfläche 8 des zweiten Formenteils 3 ausgebildet. Die Formfläche 8 dient im Wesentlichen zur Ausbildung einer Innenseite des Zahnverblendungselements, mit welcher dieses im Wesentlichen auf einem Zahn bzw. einem Zahnstumpf appliziert wird.

Die Formflächen 6 und 8 begrenzen den Hohlraum 9 der Form 1 zur Formung eines Zahnverblendungselements. Vorliegend ist das Stempelelement 7 einstückig mit dem Formenteil 3 ausgebildet.

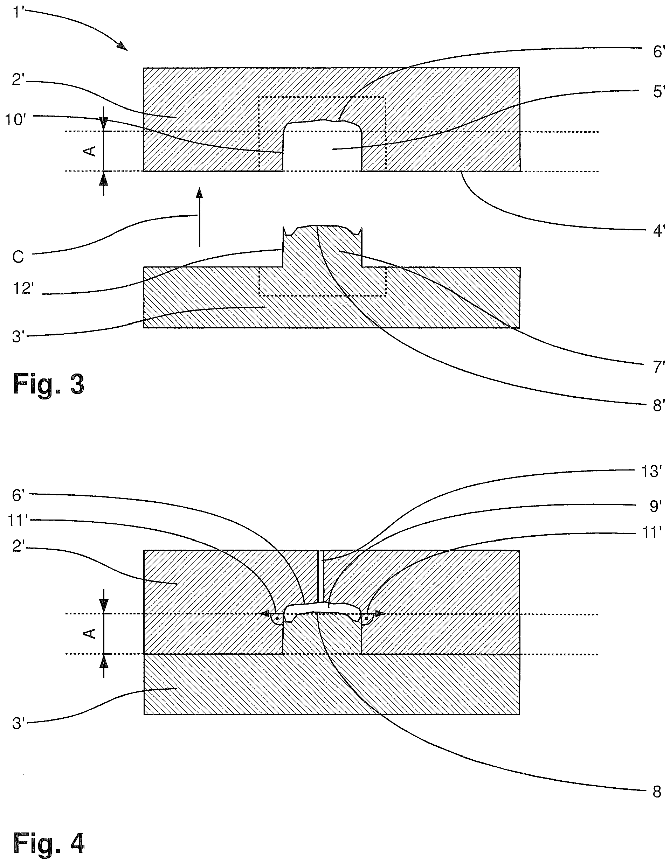

Ein Rand 6a (siehe bspw. Fig. 5) der Formfläche 6 des ersten Formenteils 2 ist in einem Abstand A von der Trennfläche 4, in das Formenteil 2 hinein versetzt, angeordnet. Ein Rand der Formfläche 8 des Formenteils 3 ist dabei unmittelbar beim Rand 6a der Formenfläche 6 angeordnet, sodass der Hohlraum 9 weitgehend vollständig von den Formflächen 6 und 8 umschlossen ist. Der Hohlraum 9 weist eine mittlere Dicke d auf (ersichtlich bspw. in Fig. 2), welche längs einer Richtung D gemessen ist, welche senkrecht zur Längsrichtung E angeordnet ist. Vorliegend ist die Richtung D zu einer Fügerichtung C der beiden Formenteile 2 und 3 parallel ausgerichtet (eine solche Ausrichtung ist bspw. aus Fig. 3 ersichtlich). Eine Breite B längs der Querrichtung F, senkrecht zur Längsrichtung E und zu D erstreckt sich von einem Randabschnitt der Formfläche 6 zu einem gegenüberliegenden Randabschnitt, wie bspw. aus Fig. 2 ersichtlich.

An den Rand 6a der Formfläche 6 schliesst ein Flächenabschnitt 10 an, welcher sich zur Trennfläche 4 hin erstreckt. Der Flächenabschnitt 10 erstreckt sich dabei im Querschnitt geradlinig ausgehend vom Formbereich 6 unter einem Winkel □..grösser als Null gegenüber einer äusseren Flächennormale 11 der Formfläche 6. Die Flächennormale 11 entspricht dabei einer Flächensenkrechten zur Formfläche 6 unmittelbar bei deren Rand 6a (siehe hierzu Fig. 5).

Der Flächenabschnitt 10 bildet dabei eine Innenwand der Vertiefung 5 und erstreckt sich von einem Rand der Öffnung der Vertiefung 5 an der Trennfläche 4 bis zum Rand 6a der Formfläche 6. Im Querschnitt läuft der Flächenabschnitt 10 zur Formfläche 6 hin zusammen. Vorliegend ist eine Mantelfläche 12 des Stempelelements 7 komplementär zum Flächenabschnitt 10 ausgebildet.

Figur 3 zeigt eine weitere Ausführungsform eine erfindungsgemässen Form 1' in einem geöffneten Zustand. Figur 4 zeigt die Form 1' in einem geschlossenen Zustand. Im Folgenden sind die Fig. 3 und 4 gemeinsam beschrieben.

Die Form 1' weist ein erstes Formenteil 2' mit einer Vertiefung 5' und ein zweites Formenteil 3' mit einem Stempelelement 7' auf. Das Stempelelement 7' ist vorliegend als austauschbarer Einsatz ausgebildet, welcher in einer entsprechende Ausnehmung am Formenteil 3' eingesetzt ist (gestrichelt angedeutet). Ebenso ist die Vertiefung 5' in einem Einsatz ausgebildet, welcher in eine Aussparung an einer Trennfläche 4' des Formenteils 2' eingesetzt ist (gestrichelt angedeutet).

Der Boden der Vertiefung 5' ist von einer Formfläche 6' des Formenteils 2' gebildet und stirnseitig am Stempelelement 7' ist eine Formfläche 8' des Formenteils 3' ausgebildet. Die Formflächen 6' und 8' bilden in geschlossenem Zustand einen Hohlraum 9' zur Formung eines Zahnverblendungselements.

Eine Mantelfläche 12' des Stempelelements 7' ist vorliegend im Wesentlichen prismatisch ausgebildet, d.h. weist eine zylindrische Form auf, wobei der Querschnitt dem längs der Längsachse der prismatischen Form projizierten Umriss der Formflächen 6' und 8' entspricht. Die Vertiefung 5' weist eine komplementäre im Wesentlichen prismatische Form auf. Der Flächenabschnitt 10' ist vorliegend um einen Winkel □ von 90 Grad gegenüber Flächennormalen 11' längs eines Randes der Kontaktfläche 6' zur Trennfläche 4' hin geneigt. Es versteht sich, dass die Flachennormalen 11' dabei nicht exakt in einer gemeinsamen Ebene liegen müssen. Einerseits können die Flächenormalen 11' beispielsweise in mehreren, parallelen Ebenen liegen. Ebenso können sie ausgehend vom Rand in leicht gekrümmten Ebenen liegen. Aus diesem Grund braucht der Winkel □ zwischen dem Flächenabschnitt 10' und der Flächennormalen nicht exakt 90 Grad zu betragen sondern kann in einem Bereich um 90 Grad variieren. Dies ist bei einer zweiteiligen Form allerdings nur beschränkt möglich, da zu grossen Abweichungen der Flächennormalen von einer gemeinsamen Ebene Hinterschnitte des Hohlraums 9' bedingen, welche ein Ausformen des Zahnverblendungselements erschweren bzw. behindern können.

In Fig. 4 ist zudem ein Entlüftungskanal 13' eingezeichnet (in Fig. 3 nicht dargestellt), welcher zur Entlüftung des Hohlraums 9' und gegebenenfalls als Ablauf für überschüssiges Material des Zahnverblendungselements wie z.B. ein Kompositmaterial dient. Der Entlüftungskanal 13' mündet weitgehend mittig an der Kontaktfläche 6' in den Hohlraum 9'. Der Entlüftungskanal 13' kann somit als Form für eine Haltevorrichtung genutzt werden, welche als Stumpf an einer späteren vorderen Aussenfläche des Zahnverblendungselements ausgebildet ist. Der Stumpf wird nach der Applikation des Zahnverblendungselements abgeschliffen. Die erfindungsgemässe Form 1 oder 1' kann z.B. zur Druck- oder Pressformung genutzt werden, bei welcher das Material des Zahnverblendungselements vor dem schliessen der Form eingebracht wird. Dabei wird ausreichend Material eingebracht, welches z.B. über den Entlüftungskanal 13' entweichen kann. Ebenso kann die erfindungsgemässe Form 1 oder 1' auch nach Art eines Spritzgusses Anwendung finden, bei welchem das Material nach dem Schliessen der Form eingespritzt wird. Überschüssiges Material kann dabei analog durch den Entlüftungskanal 13' entweichen. Figur 5 zeigt zur besseren Illustration schematisch eine Ansicht der Formfläche 6 mit Rand 6a ohne weitere Elemente des Formenteils 2. Längs eines Abschnitts des Randes 6a ist eine Schar von Flächenormalen 11 eingezeichnet (Pfeile). Der Flächenabschnitt 10 ist in einer Teilansicht dargestellt und schliesst mit den Flächennormalen 11 den Winkel α ein. Es versteht sich, dass sich der Flächenabschnitt 11 je nach Erfordernis vollständig oder auch nur längs eines Abschnitts des Randes 6a erstrecken kann.

## Patentansprüche

1. Form (1, 1') zur Herstellung von Zahnverblendungselementen umfassend:
- ein erstes Formenteil (2, 2') und
- wenigstens ein weiteres Formenteil (3, 3'),
- wobei zwischen dem ersten und dem wenigstens einen weiteren Formenteil in einem geschlossenen Zustand der Form (1/1') ein Hohlraum (9, 9') zur zumindest teilweisen Formung des Zahnverblendungselements gebildet ist,
- das erste Formenteil (2, 2') an einer Trennfläche (4, 4') eine Formfläche (6, 6') aufweist, welche den Hohlraum (9, 9') zumindest teilweise begrenzt und zur zumindest teilweisen Ausbildung einer Oberfläche, bevorzugt einer äusseren Frontfläche, des Zahnverblendungselements ausgebildet ist,
**dadurch gekennzeichnet, dass** das erste Formenteil (2, 2') einen Flächenabschnitt (10, 10') aufweist, welcher wenigstens in einem Abschnitt an einen Rand (6a) der Formfläche (6, 6') angrenzt, wobei der Flächenabschnitt (10, 10') gegenüber jeder Flächenormalen (11, 11') längs des Randes der Formfläche (6, 6') zur Trennfläche (4, 4') des ersten Formenteils (2, 2') hin geneigt ist, und wobei die Neigung des Flächenabschnitts (10, 10') derart gewählt ist, dass der Flächenabschnitt in jedem Punkt längs des Randes von einer Flächennormalen (11, 11') in diesem Punkt bzw. in einem unmittelbar benachbarten Punkt der Formfläche weg geneigt ist.

2. Form (1) nach Anspruch 1, **dadurch gekennzeichnet, dass** der Flächenabschnitt (10, 10') in jedem Punkt längs des Abschnitts, in welchem er an den Rand (6a) angrenzt, gegenüber den Flächennormalen (11, 11') um einen Winkel von wenigstens 45 Grad, bevorzugt um einen Winkel von 90 Grad geneigt ist.

3. Form (1) nach Anspruch 1 oder 2, **dadurch gekennzeichnet, dass** die Formfläche (6, 6') zumindest teilweise derart in einer Vertiefung (5, 5') an der Trennfläche (4, 4') ausgebildet ist, dass der Rand (6a) der Formfläche (6, 6') wenigstens abschnittweise, bevorzugt über seine gesamte Länge, wenigstens einen Abstand (A) von der Trennfläche (4, 4')aufweist.

4. Form (1) nach einem der Ansprüche 1 bis 3, **dadurch gekennzeichnet, dass** der wenigstens eine weitere Formenteil (3, 3') ein Stempelelement (7, 7') aufweist, welches vorzugsweise gegebenenfalls zum Erstellen des geschlossenen Zustands der Form in die Vertiefung (5, 5') des ersten Formenteils einbringbar ist, wobei eine Stirnfläche des Stempelelements (7, 7') eine weitere Formfläche (8, 8') aufweist, welche den Hohlraum (9, 9') in geschlossenem Zustand der Form (1) zumindest teilweise begrenzt.

5. Form (1) nach Anspruch 4, **dadurch gekennzeichnet, dass** das Stempelelement (7, 7') austauschbar ausgebildet und am wenigstens einen weiteren Formenteil angebracht ist.

6. Form (1) nach Anspruch 3 in Verbindung mit einem der Ansprüche 4 oder 5, **dadurch gekennzeichnet, dass** die Vertiefung (5, 5') weitgehend prismatisch ausgebildet ist und die Formfläche (6, 6') des ersten Formteils (2, 2') einen Boden der Vertiefung (5, 5') bildet, wobei das Stempelelement (7, 7') eine im Wesentlichen komplementäre prismatische Gestalt aufweist und die weitere Formfläche (8, 8') des zweiten Formteils (3, 3') die Stirnseite des Stempelelements (7, 7') bildet.

7. Form (1) nach einem der Ansprüche 1 bis 6, **dadurch gekennzeichnet, dass** die Form (1) ein Metall und/oder einen Kunststoff umfasst.

8. Form (1) nach einem der Ansprüche 1 bis 7, **dadurch gekennzeichnet, dass** wenigstens eines der Formenteile zumindest einen Entlüftungskanal (13') aufweist, welcher mit dem Hohlraum (9, 9') der Form (1, 1') kommuniziert, wobei der Entlüftungskanal (13') bevorzugt im ersten Formenteil (2, 2') ausgebildet ist und an der Formfläche (6, 6') des ersten Formenteils (2, 2'), weitgehend mittig angeordnet, mündet.

9. Form (1) nach einem Ansprüche 1 bis 8, **dadurch gekennzeichnet, dass** der Hohlraum (9, 9') zwischen dem ersten Formenteil (2, 2') und dem zweiten Formenteil (3, 3') eine mittlere Dicke (d) von 0.1 mm bis 1.5 mm aufweist, wobei bevorzugt die Dicke (d) entlang einer zur Messrichtung (D) der Dicke (d) weitgehend senkrechten Längsrichtung (E) und/oder Querrichtung (F) variiert.

10. Form (1) nach einem der Ansprüche 1 bis 9, **dadurch gekennzeichnet, dass** der Hohlraum (9, 9') ein Volumen von 1 mm³ bis 340 mm³ aufweist.

11. Verfahren zur Herstellung eines Zahnverblendungselements, wobei ein fliessfähiges, viskoses oder pastöses Kompositmaterial in einen Hohlraum (9, 9') einer Form (1) nach den Ansprüchen 1 bis 10 eingebracht und, insbesondere unter Druck, von der Form (1, 1') geformt wird.

12. Verfahren nach Anspruch 11, **dadurch gekennzeichnet, dass** beim Formen, insbesondere aufgrund des Flächenabschnitts (10, 10'), ein Grat mit einer Oberfläche am Zahnverblendungselement entsteht, welche Oberfläche unter einem Winkel grösser als 90 Grad zu einer angrenzenden Oberfläche des Zahnverblendungselements ausgerichtet ist.

## Claims

1. Mould (1, 1') for producing tooth-veneer elements, comprising:
- a first mould part (2, 2') and
- at least one further mould part (3, 3'),
- wherein a cavity (9, 9') for the at least partial moulding of the tooth-veneer element is formed between the first and the at least one further mould parts in a closed state of the mould (1/1'),
- the first mould part (2, 2'), along a parting surface (4, 4'), has a moulding surface (6, 6'), which at least partially delimits the cavity (9, 9') and is designed for at least partially forming a surface, preferably an outer front surface, of the tooth-veneer element,
**characterized in that** the first mould part (2, 2') has a surface portion (10, 10'), at least part of which is adjacent to a periphery (6a) of the moulding surface (6, 6'), wherein the surface portion (10, 10') is inclined in the direction of the parting surface (4, 4') of the first mould part (2, 2') in relation to each surface normal (11, 11') along the periphery of the moulding surface (6, 6'), and wherein the inclination of the surface portion (10, 10') is selected such that the surface portion, at each point along the periphery, is inclined away from a surface normal (11, 11') at this point or at a directly adjacent point of the moulding surface.

2. Mould (1) according to claim 1, **characterized in that**, at each point along its part which is adjacent to the periphery (6a), the surface portion (10, 10') is inclined by an angle of at least 45 degrees, preferably by an angle of 90 degrees, in relation to the surface normal (11, 11').

3. Mould (1) according to claim 1 or 2, **characterized in that** the moulding surface (6, 6') is at least partially formed in a depression (5, 5') on the parting surface (4, 4') such that the periphery (6a) of the moulding surface (6, 6'), at least in certain regions, but preferably over its entire length, is spaced apart from the parting surface (4, 4') by at least one distance (A).

4. Mould (1) according to one of claims 1 to 3, **characterized in that** the at least one further mould part (3, 3') has a male-mould element (7, 7'), which preferably can be introduced into the depression (5, 5') of the first mould part, if appropriate, for the purpose of establishing the closed state of the mould, wherein an end surface of the male-mould element (7, 7') has a further moulding surface (8, 8'), which at least partially delimits the cavity (9, 9') in the closed state of the mould (1).

5. Mould (1) according to claim 4, **characterized in that** the male-mould element (7, 7') is designed to be interchangeable and is fitted on the at least one further mould part.

6. Mould (1) according to claim 3 in conjunction with either of claims 4 and 5, **characterized in that** the depression (5, 5') is of largely prismatic design and the moulding surface (6, 6') of the first moulding part (2, 2') forms a base of the depression (5, 5'), wherein the male-mould element (7, 7') has an essentially complementary prismatic configuration and the further moulding surface (8, 8') of the second moulding part (3, 3') forms the end side of the male-mould element (7, 7').

7. Mould (1) according to one of claims 1 to 6, **characterized in that** the mould (1) comprises a metal and/or a plastics material.

8. Mould (1) according to one of claims 1 to 7, **characterized in that** at least one of the mould parts has at least one venting channel (13'), which communicates with the cavity (9, 9') of the mould (1, 1'), wherein the venting channel (13') is formed preferably in the first mould part (2, 2') and opens out in the moulding surface (6, 6') of the first mould part (2, 2'), largely in the centre of said moulding surface.

9. Mould (1) according to one of claims 1 to 8, **characterized in that** the cavity (9, 9') between the first mould part (2, 2') and the second mould part (3, 3') has an average thickness (d) of 0.1 mm to 1.5 mm, wherein it is preferably the case that the thickness (d) varies along a longitudinal direction (E) and/or transverse direction (F), both of which are largely perpendicular to the direction (D) in which the thickness (d) is measured.

10. Mould (1) according to one of claims 1 to 9, **characterized in that** the cavity (9, 9') has a volume of 1 mm³ to 340 mm³.

11. Method of producing a tooth-veneer element, wherein a free-flowing, viscous or pasty composite material is introduced into a cavity (9, 9') of a mould (1) according to claims 1 to 10 and, in particular under pressure, is moulded by the mould (1, 1').

12. Method according to claim 11, **characterized in that** the moulding operation, in particular the surface portion (10, 10'), gives rise to flash with a surface on the tooth-veneer element, which surface is oriented at an angle of greater than 90 degrees in relation to an adjacent surface of the tooth-veneer element.

## Revendications

1. Moule (1, 1') pour la fabrication d'éléments de facette dentaire, comprenant :
- une première partie de moule (2, 2') et
- au moins une partie de moule supplémentaire (3, 3'),
- une cavité (9, 9') pour la formation au moins partielle de l'élément de facette dentaire étant formée entre la première partie de moule et l'au moins une partie de moule supplémentaire dans un état fermé du moule (1/1'),
- la première partie de moule (2, 2') présentant au niveau d'une surface de séparation (4, 4'), une surface de moule (6, 6') qui limite au moins en partie la cavité (9, 9') et qui est réalisée pour réaliser au moins en partie une surface, de préférence une surface frontale extérieure de l'élément de facette dentaire,
**caractérisé en ce que** la première partie de moule (2, 2') présente une portion de surface (10, 10') qui, au moins dans une portion, est adjacente à un bord (6a) de la surface de moule (6, 6'), la portion de surface (10, 10') étant inclinée par rapport à chaque normale à la surface (11, 11') le long du bord de la surface de moule (6, 6') vers la surface de séparation (4, 4') de la première partie de moule (2, 2'), et l'inclinaison de la portion de surface (10, 10') étant choisie de telle sorte que la portion de surface en chaque point le long du bord soit inclinée à l'écart d'une normale à la surface (11, 11') en ce point ou en un point directement adjacent à la surface du moule.

2. Moule (1) selon la revendication 1, **caractérisé en ce que** la portion de surface (10, 10'), en chaque point le long de la portion dans laquelle il est adjacent au bord (6a), est inclinée par rapport à la normale à la surface (11, 11') suivant un angle d'au moins 45 degrés, de préférence suivant un angle de 90 degrés.

3. Moule (1) selon la revendication 1 ou 2, **caractérisé en ce que** la surface de moule (6, 6') est réalisée au moins en partie dans un renfoncement (5, 5') au niveau de la surface de séparation (4, 4') de telle sorte que le bord (6a) de la surface de moule (6, 6') présente au moins en partie, de préférence sur toute sa longueur, au moins une distance (A) à la surface de séparation (4, 4').

4. Moule (1) selon l'une quelconque des revendications 1 à 3, **caractérisé en ce que** l'au moins une partie de moule supplémentaire (3, 3') présente un élément de poinçon (7, 7') qui peut être introduit, de préférence éventuellement pour produire l'état fermé du moule, dans le renfoncement (5, 5') de la première partie de moule, une surface frontale de l'élément de poinçon (7, 7') présentant une surface de moule supplémentaire (8, 8') qui limite au moins en partie la cavité (9, 9') dans l'état fermé du moule (1).

5. Moule (1) selon la revendication 4, **caractérisé en ce que** l'élément de poinçon (7, 7') est réalisé de manière remplaçable et est monté sur l'au moins une partie de moule supplémentaire.

6. Moule (1) selon la revendication 3, en association avec l'une quelconque des revendications 4 ou 5, **caractérisé en ce que** le renfoncement (5, 5') est réalisé essentiellement sous forme prismatique et la surface de moule (6, 6') de la première partie moulée (2, 2') forme un fond du renfoncement (5, 5'), l'élément de poinçon (7, 7') présentant une forme prismatique essentiellement complémentaire et la surface de moule supplémentaire (8, 8') de la deuxième partie moulée (3, 3') formant le côté frontal de l'élément de poinçon (7, 7').

7. Moule (1) selon l'une quelconque des revendications 1 à 6, **caractérisé en ce que** le moule (1) comprend un métal et/ou un plastique.

8. Moule (1) selon l'une quelconque des revendications 1 à 7, **caractérisé en ce qu'**au moins l'une des parties de moule présente au moins un canal de désaérage (13') qui communique avec la cavité (9, 9') du moule (1, 1'), le canal de désaérage (13') étant réalisé de préférence dans la première partie de moule (2, 2') et débouchant, de manière disposée essentiellement centralement, au niveau de la surface de moule (6, 6') de la première partie de moule (2, 2').

9. Moule (1) selon l'une quelconque des revendications 1 à 8, **caractérisé en ce que** la cavité (9, 9') présente, entre la première partie de moule (2, 2') et la deuxième partie de moule (3, 3') une épaisseur moyenne (d) de 0,1 mm à 1,5 mm, l'épaisseur (d) variant de préférence le long d'une direction longitudinale (E) et ou d'une direction transversale (F) essentiellement perpendiculaire à la direction de mesure (D) de l'épaisseur (d).

10. Moule (1) selon l'une quelconque des revendications 1 à 9, **caractérisé en ce que** la cavité (9, 9') présente un volume de 1 mm³ à 340 mm³.

11. Procédé de fabrication d'un élément de facette dentaire, dans lequel un matériau composite coulant, visqueux ou pâteux, est introduit dans une cavité (9, 9') d'un moule (1) selon les revendications 1 à 10, et est formé, en particulier sous pression, par le moule (1, 1').

12. Procédé selon la revendication 11, **caractérisé en ce que** lors du moulage, en particulier du fait de la portion de surface (10, 10'), une bavure avec une surface est créée au niveau de l'élément de facette dentaire, laquelle surface est orientée suivant un angle supérieur à 90 degrés par rapport à une surface adjacente de l'élément de facette dentaire.
